# EUROPEAN PATENT APPLICATION

(11) **EP 3 565 037 A1**
(43) Date of publication of application: **06.11.2019**
(21) Application number: 17887489.7
(22) Date of filing: 20.12.2017
(51) Int. Cl.: H01M 4/36

(54) **METHOD FOR MANUFACTURING ELECTRODE MATERIAL, ELECTRODE MATERIAL, AND ELECTRODE FOR SECONDARY BATTERY**

(30) Priority: 27.12.2016 JP 2016252447
(71) Applicant: Toray Industries, Inc., Tokyo 103-8666 (JP)
(72) Inventor: KONISHI Takashi, Otsu-shi Shiga 520-8558 (JP); TAMAKI Eiichiro, Otsu-shi Shiga 520-8558 (JP)
(74) Representative: Kador & Partner PartG mbB
(86) International application number: PCT/JP2017/045820
(87) International publication number: WO 2018/123778

(57) **Abstract**

The present invention is a method for manufacturing an electrode material obtained by covering an electrode active substance with a graphene material, wherein the method for manufacturing an electrode material comprises either one of the following electrostatic adsorption steps: (1) a step in which a cationization agent is made to be electrostatically adsorbed on an electrode active substance and then a graphene material is made to be electrostatically adsorbed on the electrode active substance to which the cationization agent has been electrostatically adsorbed; and (2) a step in which a cationization agent is made to be electrostatically adsorbed on a graphene material and then the graphene material to which the cationization agent has been electrostatically adsorbed is made to be electrostatically adsorbed on an electrode active substance.

## Description

### TECHNICAL FIELD

The present invention relates to a method for manufacturing an electrode material in which an electrode active substance is covered with graphene, an electrode material covered with graphene, and an electrode containing the electrode material.

### BACKGROUND ART

A lithium ion battery is composed of, at least a positive electrode and a negative electrode containing an active substance capable of inserting and deserting lithium ions reversibly, a separator separating the positive electrode and the negative electrode disposed in a container, and a nonaqueous electrolyte filled in the container.

The positive electrode is formed by applying a positive electrode paste, which contains a positive electrode active substance for a lithium battery, a conductive additive, and a binder, to a metal foil current collector of aluminum or the like. Currently, for the positive electrode active substance, powders of a complex oxide of lithium and transition metal are often used. Examples of the complex oxide include lithium manganate (LiMn₂O₄) having a spinel structure, lithium manganate having a rock salt type structure (LiMnO₂), lithium cobaltate (LiCoO₂), lithium nickelate (LiNiO₂), a ternary system in which nickel is partially substituted with manganese and cobalt (LiNiₓMn_{y}Co_{1-x-y}O₂), and a ternary system in which nickel is partially substituted with cobalt and aluminum (LiNiₓCo_{y}Al_{1-x-y}O₂).

On the other hand, the negative electrode is formed by, similar to the positive electrode, applying an electrode agent, which contains an active substance, a conductive additive, and a binder, to a metal foil current collector of copper or the like. In general, as the active substance of the negative electrode, metal lithium, a lithium alloy such as a Li-Al alloy and a Li-Sn alloy, a silicon compound containing Si, SiO, SiC, SiOC, or the like as basic constituent elements, a lithium-doped conductive polymer such as polyacetylene and polypyrrole, an intercalation compound incorporating lithium ions into a crystal, carbon materials such as natural graphite, artificial graphite, and hard carbon, and the like are used.

Among positive electrode active substance currently in practical use, LiNi_{0.8}Co_{0.15}Al_{0.05}O₂ in which part of Ni atoms of lithium nickelate (LiNiO₂) are substituted with Co atoms and Al atoms and a ternary system in which part of Ni atoms are substituted with Mn atoms and Co atoms (LiMnₓNi_{y}Co_{1-x-y}O₂) (x > 0, y > 0, x + y < 1) are frequently used since these materials have a good balance in terms of price, characteristics, and safety features. However, even when such a positive electrode active substance is used, there still exists a problem of battery deterioration such as capacity deterioration and increase in internal resistance when the battery is used repeatedly or used under severe conditions such as high temperature. It is said that such battery deterioration is caused by a decomposition reaction of an electrolyte on a surface of the active substance and occurrence of a deteriorated layer with high resistance. For example, when LiNi_{0.8}Co_{0.15}Al_{0.05}O₂ is used as the active substance, and the battery is used repeatedly or used at high temperature, it is frequently reported that an inert divalent Ni is generated and grown on the surface, and electron conductivity and ion conductivity are reduced.

For the negative electrode active substance, though Si is getting attention as a high capacity negative electrode, it is frequently reported that deterioration due to reduction of electron conductivity between the active substance and the conductive additive and the decomposition reaction of the electrolyte on the surface of the active substance appear remarkably when the battery is used repeatedly or used at high temperature.

In order to solve these problems, for the positive electrode active substance, Non-Patent Document 1 discloses a technique of covering the surface of active substance particles with an insulating layer such as Al₂O₃, AlPO₄, and LiAlO₂ in order to prevent the battery deterioration due to repeated use or high temperature use. In addition, Patent Document 1, Patent Document 2, and Non-Patent Document 2 disclose a technique of mixing graphene oxide with a positive electrode active substance and then reducing the mixture.

Further, for the negative electrode active substance, in order to prevent battery deterioration, Patent Document 3 discloses a method in which graphene oxide is mixed with Si fine particles and then heated from 150°C to 200°C under a reducing atmosphere.

### BACKGROUND ART DOCUMENTS

### PATENT DOCUMENTS

Patent Document 1: JP-A-2013-93316
Patent Document 2: WO 2014/115669
Patent Document 3: JP-A-2013-28525

### NON-PATENT DOCUMENTS

Non-Patent Document 1: J. Cho, Y. J. Kim, and B. Park, Chemistry of Materials, 12(12),3788(2000).
Non-Patent Document 2: Qin Z., et al. Journal of Materials Chemistry, 2011, 22, 21144

### SUMMARY OF THE INVENTION

### PROBLEMS THAT THE INVENTION IS TO SOLVE

For the covering with the insulating layer described in Non-Patent Document 1, since an aluminum oxide has poor electron conductivity and ion conductivity, the battery deterioration is prevented, but in exchange, reduction of output characteristics cannot be avoided.

On the other hand, in the Patent Documents 1 and 2 and Non-Patent Document 2, the graphene oxide and the active substance are mixed and then dried, and the dried mixture is reduced to obtain particles. However, when such a technique is used, there is almost no chemical interaction between the graphene oxide and the positive electrode active substance, and they are merely physically contacted, hence, they may be separated easily when the battery is used repeatedly or used at high temperature. Consequently, electron conductivity of the surface of the positive electrode active substance may deteriorate, and surface resistance may become large.

In the Patent Document 3, in order to prevent battery deterioration at a Si negative electrode, the graphene oxide and the Si fine particles are mixed and then heated from 150°C to 200°C under a reducing atmosphere to reduce the graphene oxide. However, even in this case, since the graphene and the Si fine particles are merely physically in contact with each other, the graphene and the Si fine particles are easily separated by severe expansion and contraction of Si during charging and discharging when the battery is used repeatedly or used at high temperature, and the battery deterioration occurs due to reduction of electron conductivity. Further, since the Si fine particles are pulverized, reactivity between the active substance and the electrolyte is enhanced, battery deterioration due to electrolyte decomposition occurs at the same time, and there remains a problem in prevention of the battery deterioration.

It is an object of the present invention to provide a method for manufacturing an electrode material capable of preventing battery deterioration when used repeatedly or used under severe conditions such as high temperature without impairing output characteristics.

### MEANS FOR SOLVING THE PROBLEMS

In order to solve the above problems, as a result of intense study, it has been found that when graphene oxide or graphene is electrostatically adsorbed on a surface of electrode active substance through a cationization agent, the graphene oxide or graphene covers the surface of the electrode active substance thinly, uniformly, and firmly. It is also found that use of the electrode material thus obtained enables prevention of battery deterioration under severe use condition without impairing output characteristics of secondary battery. The invention is thus completed.

That is, the present invention comprises the following features <1> to <17>.
<1> A method for manufacturing an electrode material, in which the electrode material comprises an electrode active substance covered with a graphene material, the method including either of the following electrostatic adsorption steps:
   (1) a step of electrostatically adsorbing a cationization agent on the electrode active substance, and then electrostatically adsorbing the graphene material on the electrode active substance on which the cationization agent has been electrostatically adsorbed; and
   (2) a step of electrostatically adsorbing the cationization agent on the graphene material, and then electrostatically adsorbing the graphene material on which the cationization agent has been electrostatically adsorbed on the electrode active substance.
<2> The method for manufacturing an electrode material according to <1>, in which the cationization agent includes at least one kind selected from the group consisting of a cationic low molecular compound containing at least one of a quaternary ammonium cation and a pyridinium salt, and a cationic high molecular compound.
<3> The method for manufacturing an electrode material according to <2>, in which the cationic high molecular compound includes at least one kind selected from the group consisting of a primary amino group, a secondary amino group, a tertiary amino group, an imino group, an imide group, an amide group, and a quaternary ammonium cation.
<4> The method for manufacturing an electrode material according to <2> or <3>, in which a number average molecular weight of the cationic high molecular compound is 600 or more.
<5> The method for manufacturing an electrode material according to any one of <1> to <4>, in which the graphene material having an absolute value of zeta potential in N-methylpyrrolidone of 30 mV or more is used.
<6> The method for manufacturing an electrode material according to any one of <1> to <5>, in which the electrode active substance having an absolute value of zeta potential in N-methylpyrrolidone of 30 mV or more is used.
<7> The method for manufacturing an electrode material according to any one of <1> to <6>, further including a heat treatment step of heat treating the graphene material adsorbed in the electrostatic adsorption step.
<8> The method for manufacturing an electrode material according to any one of <1> to <7>, further including a reduction step of reducing the graphene material adsorbed in the electrostatic adsorption step.
<9> The method for manufacturing an electrode material according to any one of <1> to <6>, further including a reduction step of reducing the graphene material adsorbed in the electrostatic adsorption step, in which a heat treatment step of heat treating the graphene material adsorbed in the electrostatic adsorption step is carried out simultaneously by performing a heat reduction in the reduction step.
<10> The method for manufacturing an electrode material according to any one of <1> to <9>, further including a silane coupling agent treatment step of performing a silane coupling treatment of a surface of the electrode active substance before the electrostatic adsorption step.
<11> An electrode material comprising an electrode active substance and a graphene material, in which the electrode active substance and the graphene material adhere to each other via a cationization agent comprising at least one kind selected from the group consisting of a cationic low molecular compound containing at least one of a quaternary ammonium cation and a pyridinium salt, and a cationic high molecular compound.
<12> The electrode material according to <11>, in which the cationic high molecular compound comprises at least one kind selected from the group consisting of a primary amino group, a secondary amino group, a tertiary amino group, an imino group, an imide group, an amide group, and a quaternary ammonium cation.
<13> The electrode material according to <11> or <12>, in which an average distance between the electrode active substance and the graphene material is less than 20 nm.
<14> The electrode material according to any one of <11> to <13>, in which a number average molecular weight of the cationic high molecular compound is 600 or more.
<15> The electrode material according to any one of <11> to <14>, in which an elemental ratio of nitrogen to carbon (N/C ratio) measured by X-ray photoelectron spectroscopy is 0.02 or more and 0.04 or less.
<16> The electrode material according to any one of <11> to <15>, in which at least one of an amide bond and a siloxane bond is detected.
<17> An electrode for a secondary battery, including the electrode material according to any one of <11> to <16>.

### ADVANTAGES OF THE INVENTION

In the electrode material obtained by the manufacturing method of the present invention, the electrode active substance is covered with graphene thinly, uniformly, and firmly, and thus the battery deterioration can be prevented under severe use conditions such as repeated use or use at high temperature without impairing output characteristics when it is used in the secondary battery.

### BRIEF DESCRIPTION OF THE DRAWINGS

Fig. 1 is an SEM observation image of a surface of a positive electrode for a lithium ion battery produced in Example 1.
Fig. 2 is an SEM observation image of a surface of a positive electrode for a lithium ion battery produced in Comparative Example 1.

### EMBODIMENTS FOR CARRYING OUT THE INVENTION

Embodiments of the present invention will be described in detail below.

In the present specification, all percentages and parts expressed by mass are the same as percentages and parts expressed by weight.

### <Method for Manufacturing Electrode Material>

### [Graphene material]

Graphene refers to a sheet (monolayer graphene) of sp² bonded carbon atoms having a thickness of one atom in a narrow sense, but the one with a flaky form in which monolayer graphene is laminated is also referred to as graphene in the present specification. Similarly, graphene oxide also includes the one with a laminated flaky form. In the present specification, those having an element ratio of an oxygen atom to a carbon atom (degree of oxidation) measured by X-ray photoelectron spectroscopy (XPS) of more than 0.4 are referred to as graphene oxide, and those having the element ratio of 0.4 or less are referred to as graphene. In addition, a surface treatment agent may be applied to the graphene or graphene oxide for the purpose of improving dispersibility or the like as described later. The graphene oxide or graphene to which such a surface treatment agent is applied is also referred to as "graphene oxide" or "graphene" inclusively in the present specification. In the present specification, such graphene and graphene oxide are collectively referred to as "graphene material".

The graphene oxide can be produced by known methods. Commercially available graphene oxides may also be purchased.

A method for producing the graphene oxide is preferably an improved Hammer's method. An example thereof is described below. To black lead (such as graphite powder) as a raw material, concentrated sulfuric acid, sodium nitrate, and potassium permanganate are added, and are reacted while stirring at 25°C to 50°C for 0.2 to 5 hours. Deionized water is then added to dilute, and a suspension is obtained. Subsequently, the suspension is allowed to react at 80°C to 100°C for 5 to 50 minutes. Finally, hydrogen peroxide and deionized water are added and allowed to react for 1 to 30 minutes to obtain a graphene oxide/dispersion. The black lead, which is the raw material of the graphene oxide, may be either artificial black lead or natural black lead, but the natural black lead is used preferably. The number of meshes of the raw material black lead is preferably 20,000 or less, and more preferably 5,000 or less.

As an example of a ratio of reactants, a ratio of graphite powder, concentrated sulfuric acid, sodium nitrate, potassium permanganate, and hydrogen peroxide is 10 g: 150 ml to 300 ml:2 g to 8 g:10 g to 40 g:40 g to 80 g. When the concentrated sulfuric acid, sodium nitrate, and potassium permanganate are added, temperature should be controlled using an ice bath. When the hydrogen peroxide and deionized water are added, mass of the deionized water is 10 to 20 times of mass of the hydrogen peroxide.

The graphene oxide can be obtained by drying to remove a solvent from the obtained graphene oxide/water dispersion. Drying methods are not particularly limited, but freeze-drying, spray drying, or the like can be suitably used.

In the graphene oxide used in the present invention, the higher the element ratio of an oxygen atom to a carbon atom (degree of oxidation) measured by X-ray photoelectron spectroscopy is, the more likely it is that dispersibility to a polar solvent is enhanced, aggregation is less, and covering of an electrode active substance is thinner, due to repulsion between functional groups in the polar solvent. Meanwhile, after the electrode active substance is covered with the graphene oxide, the degree of oxidation is preferably 0.8 or less so that only the graphene oxide can be reduced by low-temperature heating.

Examples of a method for producing graphene include the method for reducing the graphene oxide/water dispersion described above. The method for reducing the graphene oxide is not particularly limited, but chemical reduction is preferable. In a case of chemical reduction, examples of a reducing agent include an organic reducing agent and an inorganic reducing agent, but the inorganic reducing agent is more preferable due to ease of washing after reduction.

Examples of the organic reducing agent include an aldehyde-based reducing agent, a hydrazine derivative reducing agent, and an alcohol-based reducing agent, among which the alcohol-based reducing agent is particularly suitable because it can be reduced relatively gently. Examples of the alcohol-based reducing agent include methanol, ethanol, propanol, isopropyl alcohol, butanol, benzyl alcohol, phenol, ethanolamine, ethylene glycol, propylene glycol, and diethylene glycol.

Examples of the inorganic reducing agent include sodium dithionite, potassium dithionite, phosphorous acid, sodium borohydride, and hydrazine, among which sodium dithionite and potassium dithionite are suitably used because, in addition to low toxicity and short reaction time, they can be reduced while relatively keeping an acidic group, and thus graphene having high dispersibility in a solvent can be manufactured and is suitably used.

The graphene can be obtained by drying the reduced graphene/water dispersion and removing the solvent. The drying method is not particularly limited, but freeze-drying, spray drying, or the like can be suitably used.

When the electrode active substance is covered with graphene, graphene having an element ratio of oxygen to carbon (degree of oxidation) measured by XPS of 0.08 or more and 0.30 or less is preferably used. When the number of oxygen atoms on the graphene surface is too small, charge in the solvent is weak, and dispersibility in a solvent also deteriorates. On the other hand, when the number of oxygen atoms is too large, the graphene cannot be sufficiently reduced, and conductivity is reduced without restoring a π electron conjugated structure. The oxygen atom on the graphene surface is composed of an oxygen atom contained in a functional group such as a hydroxy group (-OH), a carboxyl group (-COOH), an ester bond (-C(=O)-O-), an ether bond (-C-O-C-), a carbonyl group (-C(=O)-), and an epoxy group, and an oxygen atom contained in a functional group of the surface treatment agent. The degree of oxidation can be controlled, for example, when a chemical peeling method is used, by changing the degree of oxidation of the graphene oxide serving as the raw material or changing an amount of the surface treatment agent. The degree of oxidation of graphene is more preferably 0.12 or more and 0.20 or less, and still more preferably 0.14 or more and 0.17 or less.

The presence of defects in the graphene material improve conductivity of lithium ions in the positive electrode material for a lithium ion battery, and thus it is preferable that the presence of defects is in a certain range. The number of the defects can be analyzed by laser Raman spectroscopy. Specifically, a ratio (I (D)/I (G)) of an intensity (I (D)) of a D band (1360 cm⁻¹) to an intensity (I (G)) of a G band (1590 cm⁻¹) measured by laser Raman spectroscopy is preferably 0.6 or more and 1.0 or less.

Thickness of the graphene material is not particularly limited, but is preferably 100 nm or less, more preferably 50 nm or less, and still more preferably 20 nm or less. A lower limit may be 0.3 nm or more. The thickness of the graphene material uses a value determined as follows. First, a dispersion of the graphene material is diluted to 0.002 mass% using N-methylpyrrolidone (NMP), and is dropped onto a glass substrate and dried. Then, the graphene material on the substrate is observed with a laser microscope capable of measuring the three-dimensional shape, and the thickness of each of graphene pieces is measured. When the thickness of each of the graphene pieces vary, an area average is determined. In this way, thicknesses of 50 graphene pieces are randomly calculated, and an average value thereof is defined as the thickness of the graphene material.

Size of the graphene material in a surface direction is not particularly limited, but is preferably 0.5 µm or more, more preferably 0.7 µm or more, and still more preferably 1 µm or more as a lower limit, and preferably 50 µm or less, more preferably 10 µm or less, and still more preferably 5 µm or less as a upper limit. The size in the surface direction refers to an average of the longest diameter and the shortest diameter of the graphene surface.

Specific surface area of the graphene material reflects the thickness and degree of peeling of the graphene material, and indicates that the larger the specific surface area is, the thinner the graphene material is and the higher the degree of peeling is. When the specific surface area of the graphene material is small, that is, when the degree of peeling is low, it becomes difficult to form a conductive network of the electrode, and when the specific surface area is large, that is, when the degree of peeling is high, it becomes easy to aggregate and thus the dispersibility is reduced and handling becomes difficult. The graphene material used in the present invention has a specific surface area measured by BET measurement method of preferably 80 m²/g or more and 250 m²/g or less, more preferably 100 m²/g or more and 200 m²/g or less, and still more preferably 130 m²/g or more and 180 m²/g or less. The BET measurement method is performed by a method described in JIS Z8830: 2013, and a method for measuring an amount of adsorbed gas is performed by a carrier gas method and analysis of adsorption data is performed by a one-point method.

The graphene material used in the present invention has an absolute value of zeta potential in N-methylpyrrolidone (NMP) of preferably 30 mV or more, and more preferably 50 mV or more. The zeta potential is measured by Laser Doppler Electrophoresis in a polar solvent after the dispersion is obtained by adding NMP to the graphene material, adjusting the concentration to 0.05 mass%, conducting a supersonic treatment, or the like. As a measurement device, for example, an electrophoretic light scattering photometer ELS-Z2 manufactured by Otsuka Electronics Co., Ltd. can be used. When the zeta potential in NMP is less than 30 mV, adsorption of a cationic polymer to be described later tends to be difficult to occur.

### [Electrode active substance]

Examples of the electrode active substance for covering include a positive electrode active substance of a lithium ion battery, a negative electrode active substance of a lithium ion battery, a sulfur active substance, and carbon materials such as mesoporous carbon, graphite, acetylene black, carbon nanotubes, and carbon fibers used for a positive electrode (air electrode) of a metal-air battery, but the manufacturing method of the present invention can be particularly preferably applied to the positive electrode active substance or the negative electrode active substance of a lithium ion battery.

As the positive electrode active substance of the lithium ion battery, metal oxide active substances such as lithium manganate having a spinel structure (LiMn₂O₄), lithium manganate having a rock salt structure (LiMnO₂), lithium cobaltate (LiCoO₂), lithium nickelate (LiNiO₂), a ternary system in which nickel is partially substituted with manganese and cobalt (LiNiₓMn_{y}Co_{1-x-y}O₂) (x > 0, y > 0, x + y < 1), and a ternary system in which nickel is partially substituted with cobalt and aluminum (LiNiₓCo_{y}Al_{1-x-y}O₂) (x > 0, y > 0, x + y < 1), and V₂O₅, metal compound active substances such as TiS₂, MoS₂, and NbSe₂, lithium iron phosphate (LiFePO₄) having an olivine structure, lithium manganese phosphate (LiMnPO₄), a solid-solution active substance, or the like can be used. In particular, a positive electrode active substance containing at least lithium and nickel, such as lithium nickelate and the ternary positive electrode active substance, is preferred since it has many hydroxy groups on the surface thereof and thus a particle surface is weakly negatively charged in a polar solvent.

As the negative electrode active substance of the lithium ion battery, metal lithium and materials which form an alloy with lithium such as titanium (Ti), tin (Sn), lead (Pb), aluminum (Al), indium (In), silicon (Si), zinc (Zn), antimony (Sb), bismuth (Bi), gallium (Ga), germanium (Ge), arsenic (As), silver (Ag), hafnium (Hf), zirconium (Zr), and yttrium (Y), a silicon compound containing Si, SiO, SiC, SiOC, or the like as basic constituent elements, a conductive polymer doped with lithium such as polyacetylene and polypyrrole, an intercalation compound incorporating lithium ions into a crystal, carbon materials such as natural black lead, artificial black lead, and hard carbon, and the like can be used. In particular, the negative electrode active substance such as the silicon compound containing Si, SiO, SiC, SiOC, or the like as basic constituent elements has many hydroxy groups on the surface thereof and has low electron conductivity, and thus these are preferable to bring out the effect of the present invention.

The electrode active substance used in the present invention has an absolute value of the zeta potential in NMP of preferably 30 mV or more, and more preferably 50 mV or more. When the zeta potential value in NMP is less than 30 mV, adsorption of a cationization agent is difficult to occur, making it difficult to form a uniform covering state. Similar to the graphene material described above, the zeta potential can be measured by Laser Doppler Electrophoresis in a polar solvent after a dispersion is obtained by adding NMP to the electrode active substance, adjusting the concentration to 0.05 mass%, conducting a supersonic treatment, or the like.

### [Silane coupling agent treatment step]

In the present embodiment, a silane coupling agent treatment step of performing a silane coupling treatment of the surface of the electrode active substance is performed before an electrostatic adsorption step to be described later, not only an electrostatic adsorption force but also an adhesion force due to a covalent bond is applied, so that the graphene material and the electrode active substance can be bonded firmly. As the silane coupling agent, a silane coupling agent, in which the shortest distance between a hydrolyzable group and a reactive functional group is within 10 atoms is preferable in terms that the active substance is more easily adhered to graphene or graphene oxide. For example, in a case of 3-amino propyltrimethoxysilane (H₂NC₃H₆Si(OCH₃)₃) to be described later as the preferable silane coupling agent, it is considered that when a Si atom of methoxysilane which is a hydrolyzable group and an N atom of an amino group which is a reactive functional group are connected in the shortest line, they are arranged at a distance of three atoms. A silane coupling agent containing an amino group and an alkoxysilyl group, a silane coupling agent containing a vinyl group and an alkoxysilyl group, or a silane coupling agent containing an epoxy group and an alkoxysilyl group is further preferably used since these silane coupling agent can easily form a covalent bond with both functional groups including a hydroxy group on the surface of the electrode active substance and an oxygen atom on the surface of the graphene material. An example of such a silane-coupling agent is shown below.

Examples of the silane-coupling agent containing a vinyl group and an alkoxysilyl group include vinyltrimethoxysilane, vinyltriethoxysilane, vinyltriacetoxysilane, allyltrimethoxysilane, vinyl tris(2-methoxyethoxy) silane, p-styryltrimethoxysilane, 3-acryloxypropyltrimethoxysilane, 3-methacryloxy propyl trimethoxysilane, 3-methacryloxy propyl triethoxysilane, 3-methacryloxy propyl methyl dimethoxysilane, and 3-methacryloxy propyl methyl diethoxysilane.

Examples of the silane coupling agent containing an epoxy group and an alkoxysilyl group include 3-glycidoxy propyltrimethoxysilane, 3-glycidoxy propyltriethoxysilane, 3-glycidoxy propyl methyldimethoxysilane, 3-glycidoxy propyl methyldiethoxysilane, 2- (3,4-epoxycyclohexyl) ethyltrimethoxysilane, 3-isocyanate propyltrimethoxysilane containing an isocyanate group and alkoxy silane, and 3-isocyanate propyltriethoxysilane.

Examples of the silane coupling agent containing an amino group and an alkoxysilyl group include 3-aminopropyltrimethoxysilane, 3-aminopropyltriethoxysilane, 3-(2-aminoethyl) aminopropyltrimethoxysilane, N-(2-aminoethyl)-3-aminopropyltrimethoxysilane, and N-(2-aminoethyl)-3-aminopropylmethyl dimethoxysilane.

### [Electrostatic adsorption step]

In the present invention, the graphene material is electrostatically adsorbed on the surface of the electrode active substance by either of electrostatic adsorption steps: (1) a step of electrostatically adsorbing the cationization agent on the electrode active substance and then electrostatically adsorbing the graphene material on the electrode active substance on which the cationization agent has been electrostatically adsorbed; and (2) a step of electrostatically adsorbing the cationization agent on the graphene material and then electrostatically adsorbing the graphene material on which the cationization agent has been electrostatically adsorbed on the electrode active substance.

The electrostatic adsorption is a phenomenon showing adsorption in which a substance carrying an electrical charge dissolved or dispersed in a solution is attracted to a solid surface of an opposite electrical charge due to Coulomb force in the vicinity of an interface between solid and liquid.

When the electrode active substance and the graphene material have a charge with the same sign (both negative charges or both positive charges) in a polar solvent, an electrostatic repulsive force works and the adsorption is difficult. In the present invention, the graphene material adheres to the electrode active substance via the cationization agent.

The cationization agent refers to a molecule showing a positive charge (hereinafter, also referred to as cationic) in a polar solvent. Although the cationization agent is not particularly limited, a cationic low molecular compound such as a quaternary ammonium cation, a pyridinium salt type, and the like or a cationic high molecular compound can be used, and at least one kind of these can be used. For the cationization agent, it is preferable to use the cationic high molecular compound for forming a uniform covering state.

Specific examples of the cationic low molecular compound include compounds described in the following (1) or (2), and specific examples of the cationic high molecular compound include compounds described in the following (3). These cationization agents may be used alone or in combination of plural kinds.

### (1) Quaternary ammonium cation (general formula (1) below)

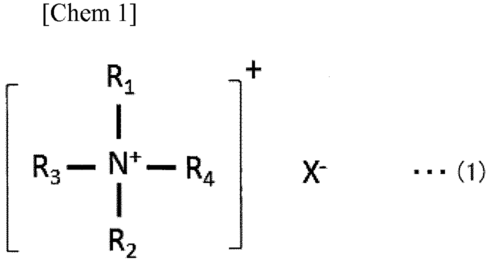

(In general formula (1), R₁ to R₄ represents a hydrogen atom, a linear or branched alkyl group having 1 to 36 carbon atoms, or a benzyl group, and each of which may be the same or different. X⁻ represents an anion capable of forming a salt with a quaternary ammonium, such as a halogen atom, an alkyl sulfate group having one or two carbon atoms, or a residue obtained by removing hydrogen atoms from an organic acid.)

Specific examples of the quaternary ammonium cation can include the following compounds.

Glycidyl trimethylammonium chloride, 3-chloro-2-hydroxypropyl trimethylammonium chloride, lauryl trimethylammonium chloride, octadecyl trimethylammonium chloride, hexadecyl trimethylammonium chloride, methacrylamido propyl trimethylammonium chloride, diallyldimethyl ammonium chloride, hexadecyl trimethylammonium bromide, dodecyl trimethylammonium chloride, dodecyl trimethylammonium bromide, dimethyl lauryl ammonium chloride, lauryl methylammonium chloride, lauryl dimethyl benzyl ammonium chloride, stearyl dimethyl benzyl ammonium chloride, octadecyl dimethyl ethyl ammonium bromide, octadecenyl trimethylammonium bromide, and the like.

### (2) Pyridinium salt type

Specific examples of a pyridinium salt type compound include laurylpyridinium chloride and stearyl amido methylpyridinium chloride.

### (3) Cationic high molecular compound

Examples of the cationic high molecular compound include a high molecular compound containing at least one kind selected from the group consisting of a primary amino group (-NH₂), a secondary amino group (-NHRi), a tertiary amino group (-NR₁R₂), an imino group (=NH), an imide group (-C(=O)-NH-C(=O)-), an amide group (-C(=O)NH-), and the quaternary ammonium cation described above. The R₁ and R₂ of the secondary amino group and the tertiary amino group represent a linear or branched alkyl group having 1 to 36 carbon atoms or a benzyl group, and each of which may be the same or different.

Specific examples of such a cationic high molecular compound include poly(N-methylvinyl amine), polyvinylamine, polyallylamine, polyallyldimethylamine, polydiallylmethylamine, polydiallyldimethylammonium chloride, polydiallyldimethylammonium trifluoromethanesulfonate, polydiallyldimethylammonium nitrate, polydiallyldimethylammonium perchlorate, polyvinyl pyridinium chloride, poly(2-vinylpyridine), poly(4-vinylpyridine), polyvinyl imidazole, poly(4-aminomethyl styrene), poly(4-aminostyrene), polyvinyl (acrylamide-co-dimethylaminopropylacrylamide), polyvinyl (acrylamide-co-dimethylaminoethyl methacrylate), polyethylene imine, polylysine, DAB-Am, polyamidoamine dendrimers, polyaminoamides, polyhexamethylene biguanide, polydimethylamine-epichlorohydrin, a product of alkylation of polyethylenimine with methyl chloride, a product of alkylation of polyaminoamides by epichlorohydrin, cationic polyacrylamide due to cationic monomers, formalin condensates of dicyandiamide, dicyandiamide, polyalkylene polyamine polycondensates, cationic polymers of a natural base (such as partially deacetylated chitin, chitosan, and chitosan salts), and synthetic polypeptides (such as polyasparagine, polylysine, polyglutamine, and polyarginine).

Among them, using the cationic high molecular compound containing the primary amino group or the secondary amino group as the cationization agent is preferable, since not only a force due to electrostatic adsorption, but also an adhesion force due to an amide bond formed by a heat treatment to be described later is applied, and adhesion becomes firmer.

A number average molecular weight of the cationic high molecular compound is preferably 600 or more. When the number average molecular weight is less than 600, the cationized polymer may diffuse, and the electrode active substance cationic polymer may be covered thickly to deteriorate conductivity of the finally obtained electrode material. On the other hand, when the number average molecular weight exceeds 100,000, resistance by the cationic polymer may increase and electron conductivity may be deteriorated. Thus, the number average molecular weight of the cationic high molecular compound is preferably 100,000 or less. In view of these, the number average molecular weight of the cationic high molecular compound is more preferably 5,000 or more and 50,000 or less, and even more preferably 10,000 or more to 20,000 or less.

The first embodiment in the electrostatic adsorption step is a step of electrostatically adsorbing the cationization agent on the electrode active substance, and then electrostatically adsorbing the graphene material on the electrode active substance on which the cationization agent has been electrostatically adsorbed. Typical operations in the electrostatic adsorption step of this embodiment are described below.

First, a polar solvent is added to and then stirred with the electrode active substance serving as a core to obtain an electrode active substance suspension A. The polar solvent may be any solvent as long as it does not react with the electrode active substance, and NMP is suitably used. Equipment for stirring is not particularly limited, and a known mixer/kneader can be used. Specific examples include methods using a rotation and revolution mixer, an automatic mortar three roll, a bead mill, a planetary ball mill, a homogenizer, a Filmix (registered trademark) (PRIMIX Corporation), a planetary mixer, a twin-screw kneader, a wet jet mill, a dry jet mill, and the like.

Further, by adding the polar solvent to the cationization agent and stirring, a separate cationization agent solution B is prepared. The polar solvent and the equipment for stirring which are same as those in a case of preparing an electrode active substance suspension A are used. As the polar solvent, it is most preferable to use the same solvent as that used for preparation of the electrode active substance suspension A.

Next, the electrode active substance suspension A and the cationization agent solution B are mixed to obtain a mixed suspension C. By mixing the electrode active substance suspension A and the cationization agent solution B, the surface of the electrode active substance weakly negatively charged in the polar solvent before mixing is cationized. That is, by an electrostatic force (electrostatic interaction) working between a negative charge of the electrode active substance and a positive charge of the cationization agent, the cationization agent has been electrostatically adsorbed on the surface of the electrode active substance, and thus the surface of the electrode active substance is positively charged. Therefore, preparation of the mixed suspension C enables to obtain the electrode active substance on which the cationization agent is electrostatically adsorbed. In doing so, it is preferable to remove the solvent by filtrating and drying the mixed suspension C (hereinafter, the mixed suspension C includes the one in a state where the solvent is removed). By drying, the cationization agent firmly adheres to the electrode active substance.

Separately, a graphene material dispersion D is prepared. The graphene material dispersion D is obtained by dispersing the above-described graphene material in a polar solvent. The polar solvent, which is similar to that in a case of preparing the electrode active substance suspension A or the cationization agent solution B, is used, but it is most preferable to use the solvent, which is the same as those used for the electrode active substance suspension A and the cationization agent solution B. It is preferable for dispersion to use a device having a strong shearing force, such as a bead mill, a homogenizer, a Filmix (registered trademark) (PRIMIX Corporation), a wet jet mill, a dry jet mill, and an ultrasonic wave. The graphene material dispersed in the dispersion exhibits anionic properties.

Then, the mixed suspension C and the graphene material dispersion D are mixed. When the mixed suspension C and the graphene material dispersion D are mixed, the graphene material is electrostatically adsorbed on the electrode active substance on which the cationization agent is electrostatically adsorbed. That is, through the electrostatic interaction between the positive charge of the cationization agent and the negative charge of the graphene material, the graphene material is fixed to the surface of the electrode active substance. Then, when the electrostatic adsorption proceeds to some extent, the surface of the electrode active substance gradually becomes a negative charge by the adsorbed graphene material, and the covering with the graphene material stops because it repels with a free graphene material present in the solvent. As a result, covering thickness with the graphene material can be controlled.

Finally, the solvent (liquid) and particles (solid) are separated by filtration or the like, and then the remaining solvent is removed by drying to obtain an electrode material or a precursor thereof in which the electrode active substance and the graphene material adhere to each other via the cationization agent.

The second embodiment in the electrostatic adsorption step is a step of electrostatically adsorbing the cationization agent on the graphene material, and then electrostatically adsorbing the graphene material on which the cationization agent has been electrostatically adsorbed on the electrode active substance. That is, a substantially similar electrode material or a precursor thereof can be produced by first mixing the graphene material dispersion D and the cationization agent solution B to prepare a mixed dispersion C', and then mixing the mixture with the electrode active substance suspension A.

In description of the above two embodiments, an embodiment in which the cationization agent solution B is prepared in advance and mixed with the electrode active substance suspension A or the graphene material dispersion C is described as an example, but when the cationization agent which can be well-dispersed without making a solution thereof in advance, the cationization agent may be directly mixed with the electrode active substance suspension A or the graphene material dispersion D without being dissolved.

### [Heat treatment step]

In a case where a cationic high molecular compound containing a primary amino group or a secondary amino group is used as the cationization agent, when the heat treatment step of heat-treating the graphene material is carried out at any stage after end of the electrostatic adsorption step, a covalent bond (amide bond) is obtained by dehydration condensation between a carboxy group contained in the graphene material and an amino group contained in the cationization agent. Hence, not only the electrostatic adsorption force but also the adhesive force due to the covalent bond are added, and the adhesion becomes firmer. This is particularly preferable to bring out the effect of the present invention. In the heat treatment step, heating is performed preferably at 200°C or higher and 600°C or lower. When the heating is performed at lower than 200°C, a dehydration condensation reaction is difficult to occur, and when it is performed at higher than 600°C, a decomposition reaction of the cationization agent may occur, and the graphene material may be peeled off from the electrode active substance. When a heat reduction is performed in the reduction step, which is described later, the heat treatment step can be performed as the same step as the reduction step. That is, a covalent bond can be formed between the cationization agent and the graphene material simultaneously with the heat reduction of the graphene material.

### [Reduction step]

In a case where graphene oxide is used as the graphene material, when conductivity of the graphene material as the electrode material is insufficient due to degree of oxidation of the graphene material being high, it is preferable to make the graphene material into the electrode material by further reducing the particles obtained through the electrostatic adsorption step. That is, when the reduction step is required, it can be said that what is obtained in the electrostatic adsorption step is a precursor to the electrode material, and the electrode material is obtained by reducing the graphene material. In this case, the π-electron conjugated structure of the graphene material is restored from the reduction step, and the electron conductivity of the surface of the electrode material is improved.

Examples of a reduction method in the reduction step include reduction by heating (heat reduction), reduction by irradiation of light (photoreduction), and chemical reduction. When the electrode active substance other than the positive electrode active substance strong in reduction such as lithium iron phosphate (LiFePO₄) with an olivine type structure and lithium manganese phosphate (LiMnPO₄) is used as the electrode active substance serving as a core, the positive electrode active substance serving as a core itself is also reduced. Therefore, when the heat reduction is performed, it is preferable to reduce at a temperature of 180°C or more and 400°C or less; when a light reduction is performed, it is preferable to irradiate white light having an intensity of 100 to 10,000 mJ/cm² with irradiation time of 1 millisecond to 1 second; and when the chemical reduction is performed, it is preferable to reduce, for example, within 1 minute using hydrazine or sodium dithionite. Among them, reduction by heat reduction of 180°C or higher and 400°C or lower is more preferable in terms of uniformity of the reduction reaction.

Further, as described above, when the cationic high molecular compound containing a primary amino group or a secondary amino group is used as the cationization agent, performing the heat reduction in the reduction step is simultaneously performing a heat treatment step of forming a covalent bond between the cationization agent and the graphene material, thus this is preferable in terms of simplification of the step.

### <Graphene covered electrode material>

According to the manufacturing method as described above, an electrode material can be obtained. The electrode material includes an electrode active substance and a graphene material, which adhere to each other via a cationization agent including at least one kind of a cationic low molecular compound such as a quaternary ammonium cation, a pyridinium salt type, and the like, and a cationic high molecular compound. That the electrode active substance and the graphene material adhere to each other via the cationization agent including at least one kind of the cationic low molecular weight compound such as a quaternary ammonium cation, a pyridinium salt type, and the like and the cationic high molecular compound, means that the graphene material is immobilized on the surface of the electrode active substance by electrostatic interaction between a negative charge of the surface of the electrode active substance and the graphene material and a positive charge of the cationization agent, and a part of a functional group such as an amino group contained in the cationization agent may react with a functional group such as a carboxy group on the surface of the graphene material to form a covalent bond by performing the heat treatment step described above. From the viewpoint of the electrostatic interaction and electrochemical stability, the cationic high molecular compound preferably contains at least one kind selected from the group consisting of a primary amino group, a secondary amino group, a tertiary amino group, an imino group, an imide group, an amide group, and a quaternary ammonium cation.

Whether or not the electrode active substance and the graphene material adhere to each other via the cationization agent including at least one kind of the cationic low molecular compound such as a quaternary ammonium cation, a pyridinium salt, and the cationic high molecular compound can be analyzed by, for example, a method described below.

First, when a cross section of the graphene covered electrode material particles is observed by a transmission electron microscope (TEM) or a scanning electron microscope (SEM), presence of a contrast other than the electrode active substance and the graphene material between the electrode active substance and the graphene material is checked, and then with respect to the contrast, whether or not nitrogen is contained is determined by electron energy loss spectroscopy (EELS) measurement or energy dispersive X-ray analysis (EDX).

Next, a kind of the cationization agent can be determined by time-of-flight secondary ion mass spectrometry (TOF-SIMS) of the graphene covered electrode material particles.

The distance between the electrode active substance and the graphene material is measured at ten positions, and an average value thereof is taken as an average distance. The average distance is preferably less than 20 nm, more preferably less than 10 nm, and still more preferably less than 5 nm. When the average distance is 20 nm or more, conductivity of the electrode material tends to deteriorate.

The graphene material preferably covers the electrode active substance at an average coverage of 70% or more. The average coverage in the present description is a value obtained by observing the surface of the electrode material by SEM and regarding an observation image as a two-dimensional plane image and calculating a percentage of a graphene covered portion on the surface of the electrode material. Specifically, one of the electrode materials is magnified and observed by SEM, the observation image is regarded as a two-dimensional plane image, and an area of the graphene-covered portion in an area of the electrode active substance particles is calculated. This operation is performed on 20 randomly selected electrode active substance particles, and an average value thereof is defined as the average coverage. The average coverage can be measured by either observing the electrode surface by SEM even after a mixture layer is produced using the electrode material or observing the electrode surface by SEM after dismantling a battery.

When the cationization agent of the cationic high molecular compound containing a primary amino group or a secondary amino group is used, an element ratio of nitrogen to carbon (N/C ratio) obtained by measuring the surface of the electrode material by XPS in a powder state is preferably 0.02 or more. When the N/C ratio exceeds 0.04, the graphene tends to aggregate, the covering state deteriorates, and ion conductivity is reduced. Thus, the N/C ratio of the electrode material is preferably 0.02 or more and 0.04 or less.

Further, when the graphene material and the cationization agent are bonded to each other by a covalent bond (amide bond) formed by the heat treatment step, not only the electrostatic adsorption force but also the adhesion force due to the covalent bond is applied, and the adhesion between the graphene material and the cationization agent becomes firm. This is preferred. That is, it is preferred that an amide bond is detected from the electrode material. The amide bond is measured by infrared analysis (IR) on the electrode material or the secondary battery electrode, and it can be identified that the amide group is contained when there are peaks around 1,600 cm⁻¹ and around 3,300 cm⁻¹.

Further, when the electrode active substance and the graphene material are bonded to each other via a covalent bond (siloxane bond) formed by a silane coupling agent, this is also preferable since the adhesion between the electrode active substance and the graphene material becomes firm. That is, it is preferred that a siloxane bond is detected from the electrode material. The siloxane bond can be detected by infrared analysis (IR) or XPS. When the infrared analysis (IR) is used, the electrode material or the electrode for a secondary battery is measured by infrared analysis (IR), and the presence of an absorption peak of stretching vibration derived from the siloxane bond around 1000 to 1200 cm⁻¹ is confirmed, so that the siloxane bond can be detected. When XPS is used, a peak having Binding Energy between 102 eV and 103 eV is observed with a narrow scanner of XPS of a silicon peak by X-ray photoelectron spectroscopy on the electrode material or the electrode for a secondary battery, so that a siloxane bond can be detected.

It is preferable that the electrode material contains at least one of the amide bond and the siloxane bond, but when the electrode material contains both the amide bond and the siloxane bond, that is more preferable since the adhesion between the electrode active substance and the graphene material is the firmest.

### <Electrode for Secondary Battery>

The electrode for a secondary battery of the present invention has a mixture layer containing an electrode material of the present invention and a conductive additive and a binder as necessary.

It is preferred that the mixture layer further contains, other than the graphene, the conductive additive having high electron conductivity. As the conductive additive, carbon materials such as black lead, carbon fiber, carbon black, acetylene black, and carbon nanofiber, and metal materials such as copper, nickel, aluminum, or silver, or powder and fiber, or the like of a mixture of these are preferable, and acetylene black, carbon fiber, and carbon nanofiber are more preferable in order to improve conductivity in a thickness direction of the electrode. The electron conductivity deteriorates when an amount of the conductive additive is too small, and a percentage of an active substance per mixture layer is small when the amount is too large. Therefore, a content of the conductive additive is preferably 0.50 to 5.0 mass%, and more preferably 0.75 to 1.5 mass% with respect to the active substance.

The mixture layer of the electrode for a secondary battery usually contains a binder. Examples of the binder contained in the mixture layer include polysaccharides such as starch, carboxymethyl cellulose, hydroxypropyl cellulose, regenerated cellulose, and diacetyl cellulose, thermoplastic resins such as polyvinyl chloride, polyvinyl pyrrolidone, polyvinyl alcohol, polyethylene, and polypropylene, fluorine polymers such as polytetrafluoroethylene (PTFE) and polyvinylidene fluoride (PVDF), polymers having rubber elasticity such as ethylene propylene diene monomer (EPDM), sulfonated EPDM, styrene-butadiene rubber, butadiene rubber, and fluororubber, and polyimide precursor and/or a polyimide resin, a polyamide-imide resin, a polyamide resin, polyacrylic acid, sodium polyacrylate, an acrylic resin, polyacrylonitrile, or polyethers such as a polyethylene oxide. When an amount of the binder is too small, adhesion strength becomes weak, and when an amount of the binder is too large, resistance increases. Therefore, a content of the binder is preferably from 0.50 to 5.0 mass%, and more preferably 0.75 to 1.5 mass% with respect to the electrode material.

Generally, in the electrode for a secondary battery, the mixture layer as described above is formed on a current collector. As the current collector, a metal foil or a metal mesh is preferably used, and in particular, an aluminum foil is preferably used for the positive electrode, and a copper foil is preferably used for the negative electrode.

Physical properties of the electrode material present in the electrode for a secondary battery are analyzed as follows. First, the battery is dismantled in an Ar glove box, the electrode is washed with dimethyl carbonate, and vacuum drying is performed for 1 hour in a side box of the Ar glove box. Next, the mixture layer is peeled off from a current collector foil using a spatula, and the obtained powder is dissolved in a solvent such as N-methylpyrrolidone (NMP) and water, and a filtered residue (electrode material, conductive additive, solvent) is separated from a filtrate (solvent and the like) by filtration. The obtained filtered residue is dried in vacuum, and then a solvent in an amount of 5 times of the mass of the filtered residue is added to the filtered residue again, and the electrode material and the conductive additive are separated using a device having a strong shearing force such as Filmix (registered trademark) 30-30 (PRIMIX Corporation) or a wet jet mill. The obtained treatment product is subjected several times to a sieve having a pore diameter that can only pass a smaller one of either of the size of the conductive additive and the particle diameter of the electrode material determined by SEM observation, so that the electrode material is separated from the conductive additive. Physical properties of the electrode material separated in this manner can be analyzed.

### EXAMPLES

For embodiments for carrying out the invention, Examples are shown below, and the invention will be described in detail, but the invention is not limited to the following Examples.

### [Measurement Example 1: zeta potential of electrode active substance and graphene material]

N-methylpyrrolidone (NMP) was added to an electrode active substance to adjust to a concentration of 0.05 mass%, and zeta potential was measured in a polar solvent. A device used was an electrophoretic light scattering photometer ELS-Z2 manufactured by Otsuka Electronics Co., Ltd. The measurement was performed twice by Laser Doppler Electrophoresis, and an average value of two times was taken as zeta potential.

In addition, NMP was also added to the graphene material and adjusted to a concentration of 0.05 mass%, and zeta potential was measured in a polar solvent.

### [Measurement Example 2: size of graphene and average covering thickness]

The electrode material obtained in each of Examples and Comparative Examples was observed at 3,000 times to 400,000 times by a scanning electron microscope (S-5500, manufactured by Hitachi, Ltd.), for ten graphenes on a plurality of randomly selected secondary battery active substances, a maximum diameter and a minimum diameter in a direction parallel to the graphene layer were measured, and an average value was taken as the size of graphene.

The electrode material was kneaded with an epoxy resin, applied to a polyethylene terephthalate (PET) film, and then cured and embedded in a resin. The whole film was milled with an ion milling device (IM4000 manufactured by Hitachi, Ltd.) to produce a measurement sample by drawing out a cross section of the resin and the electrode material. This sample was observed using a transmission electron microscope, and an average value of thicknesses of the thickest portion and the thinnest portion of the graphene present on the surface of the electrode material was taken as a covering thickness, and this average value measured for randomly selected 10 active substance particles was taken as an average covering thickness.

### [Measurement Example 3: discharge capacity and load characteristics]

Electrodes were produced as follows.

In a case of a positive electrode, 100 parts by mass of the electrode material produced in each of Examples and Comparative Examples, 1.5 parts by mass of acetylene black (Denka Black (registered trademark)) manufactured by Denka Company Limited) as a conductive additive, 1.5 parts by mass of polyvinylidene fluoride #7200 (manufactured by Kureha Corporation) as a binder, and 50 parts by mass of NMP as a solvent were added and mixed with a planetary mixer (manufactured by PRIMIX Corporation) to obtain an electrode paste. The electrode paste was applied to one-side of an aluminum foil (thickness: 15 µm) using a doctor blade, dried at 80°C for 30 minutes, and pressed to obtain an electrode plate. The dried electrode mixture layer (other than aluminum foil) was 40 µm.

In a case of a negative electrode, 100 parts by mass of the electrode material produced in each of Examples and Comparative Examples, 5 parts by mass of acetylene black (Denka Black (registered trademark) manufactured by Denka Company Limited) as a conductive additive, , 7.5 parts by mass of carboxymethyl cellulose (CMC) (manufactured by Daicel Corporation) as a binder, 7.5 parts by mass of styrene-butadiene rubber (SBR) (manufactured by JSR Corporation), and 50 parts by mass of pure water as a solvent were added and mixed with a planetary mixer (manufactured by PRIMIX Corporation) to obtain an electrode paste. The electrode paste was applied to one-side of a copper foil (thickness: 10 µm) using a doctor blade, and dried at 80°C for 30 minutes to obtain an electrode plate. The dried electrode mixture layer (other than copper foil) was 15 µm.

The produced electrode plate was cut into a diameter of 15.9 mm and set as an operation electrode, lithium foil was cut into a diameter of 16.1 mm and a thickness of 0.2 mm and set as a counter electrode, a cell guard #2400 (manufactured by Celgard, LLC.) cut into a diameter of 17 mm was set as a separator, a solvent having a ratio of ethylene carbonate to diethyl carbonate of 7:3 and containing 1 M of LiPF₆ was set as an electrolyte, a 2032 type coin battery was produced and set in a charging/discharging tester (TOSCAT-3100 manufactured by Toyo System Co., Ltd.), and electrochemical evaluation was performed.

In charge/discharge measurement, a charging voltage was 4.3 V and a discharging voltage was 3.0 V, constant current charging was performed at 1 C to the charging voltage, and then the constant voltage charging was performed at the charging voltage. An end current of the constant voltage charging was 0.01 C. Charge rates were all fixed at 1 C, and a discharge rate was performed three times at 1 C, followed by three times at 3 C, and capacity at the third discharge of each rate was taken as a discharge capacity. A ratio of 3 C discharge capacity to 1 C discharge capacity (3 C discharge capacity/1 C discharge capacity) obtained by the measurement was taken as a load characteristic.

### [Measurement Example 4: high temperature storage characteristics]

After the test of Measurement Example 3, constant current charging was performed at 1 C to the charging voltage, and then the constant voltage charging was performed to the charging voltage. An end current of the constant voltage charging was 0.01 C. Thereafter, the battery was detached from the tester (charge state), and stored at 60°C for one week using an inert oven (DN411I manufactured by Yamato Scientific Co., Ltd.). After one week, the battery was taken out, conveyed into an Ar glove box (manufactured by Miwa Mfg Co., Ltd.), dismantled, and only the electrode was detached. Using the detached electrode, Celgard #2400 (manufactured by Celgard, LLC.) cut into a diameter of 17 mm as a separator, metal lithium as a counter electrode, and 200 µL of LiPF₆/EC + DMC (LI-PASTE 1 manufactured by Toyama Pure Chemical, Co., Ltd.) as an electrolyte, a coin cell was produced again, and the discharge capacity was measured under the same conditions as in Measurement Example 3. Here, too, capacity at the third discharge of each rate was taken as the discharge capacity. A percentage (%) of the 1 C discharge capacity measured in this measurement example (after storage) to the 1 C discharge capacity measured in Measurement Example 3 (before storage) was taken as a high-temperature storage characteristic.

### [Measurement Example 5: cycle characteristics]

After the test of Measurement Example 3, the discharge rate and the discharge rate were fixed at 1 C, and the test was repeated 500 times continuously. The tests were performed under the same conditions as in Measurement Example 3 except the conditions above. A ratio of the 1 C discharge capacity after 500 cycles to the 1 C discharge capacity obtained by Measurement Example 3 (1 C discharge capacity after 500 cycles/1 C discharge capacity before a cycle) was taken as a cycle characteristic.

### [Measurement Example 6:X-ray photoelectron measurement]

An X-ray photoelectron was measured using Quantera SXM (manufactured by PHI, Inc.). An excitation X-ray was a monochromatic A1Kα 1, 2 line (1486.6 eV), a diameter of the X-ray was 200 µm, and a photoelectron escape angle was 45°. An oxidation degree was determined from a ratio of an area of 282 to 296 eV of a C1s spectrum (narrow scan) based on a carbon atom and an area of 526 to 538 eV of an O1s spectrum (narrow scan) based on an oxygen atom. An N/C ratio was determined from a ratio of an area of 396 to 406 eV of an N1s spectrum (narrow scan) based on an oxygen atom and the area of 282 to 296 eV of the C1s spectrum (narrow scan) based on a carbon atom.

### [Measurement Example 7: functionalization rate]

A functionalization rate was determined from a peak shift of a peak based on the carbon atom of the narrow scan. Specifically, the peak based on the carbon atom was separated into four components of a peak around 284 eV based on a C=C bond and a C-H bond, a peak around 286 eV based on a C-O bond, a peak around 287.5 eV based on a C=O bond, and a peak around 288.5 eV based on a COO bond, and was determined from an area ratio of each peak by the following formula.

Functionalization ratio = [(peak area based on C-O single bond) + (peak area based on C=O double bond) + (peak area based on COO bond)]/(peak area based on C-C, C=C, and C-H bonds)

### [Measurement Example 8:I (D)/I (G)]

Raman measurement was performed using Ramanor T-64000 (Jobin Yvon/manufactured by Atago Bussan Co., Ltd.). A beam diameter of 100 µm and a light source of an argon ion laser (wavelength: 514.5 nm) were used to determine a ratio (I (D)/I (G)) of an intensity (I (D)) of a D band (around 1360 cm⁻¹) and an intensity (I (G)) of a G band (around 1590 cm⁻¹) of the obtained Raman spectrum.

### [Measurement Example 9: infrared analysis]

In infrared analysis, a range of a measurement wavelength of 500 cm⁻¹ to 4,000 cm⁻¹ was measured by an ATR method using FT-IR and an infrared spectrophotometer IR-435 manufactured by Shimadzu Corporation, and, from the obtained spectrum, whether an amide bond and a siloxane bond are contained was identified.

### [Preparation Example 1: preparation of graphene oxide NMP dispersion]

1,500 meshes of the natural black lead powder (manufactured by Shanghai Yifan Graphite Co., Ltd.) is used as a raw material. 220 ml of 98% concentrated sulfuric acid, 5 g of sodium nitrate, and 30 g of potassium permanganate were added to 10 g of the natural black lead powder in an ice bath, and subjected to machine stirring for 1 hour, and the mixed liquid was kept at a temperature of 20°C or lower. The mixed liquid was taken out from the ice bath, stirred to react for 4 hours in a 35°C water bath, and then a suspension obtained by adding 500 ml of ion exchange water was further reacted at 90°C for 15 minutes. Finally, 600 ml of the ion exchange water and 50 ml of hydrogen peroxide were added, and a reaction was performed for 5 minutes to obtain a graphene oxide dispersion. This was filtered while it is hot, metal ions were washed with a dilute hydrochloric acid solution, the acid was washed with ion exchanged water, and the washing was repeated until pH reached 7 to produce the graphene oxide gel. An element composition ratio of an oxygen atom to a carbon atom of the produced graphene oxide gel was 0.53. The produced graphene oxide gel was diluted with ion exchange water to a concentration of 30 mg/ml and treated with an ultrasonic washer for 30 minutes to obtain a uniform graphene oxide dispersion.

20 ml of the obtained graphene oxide dispersion and 0.3 g of dopamine hydrochloride were mixed, and were treated (surface treatment) at a rotational speed of 40 m/s (shear velocity: 20,000 per second) with Filmix (registered trademark) 30-30 type (PRIMIX Corporation) for 60 seconds. After the treatment, filtration and drying were performed to obtain graphene oxide. A degree of oxidation measured according to Measurement Example 6 was 0.8. NMP was added to the obtained graphene, and mixed using a Filmix (PRIMIX Corporation, 30-30 type) to obtain a graphene oxide NMP dispersion having a solid concentration of 0.5%.

### [Preparation Example 2: method for preparing graphene NMP dispersion]

After (surface treatment) of Preparation Example 1, the graphene oxide dispersion was diluted to 5 mg/ml, 0.3 g of sodium dithionite was added to 20 ml of the dispersion, and was reacted in reduction reaction time of 1 hour and at a reduction reaction temperature of 40°C to obtain graphene after filtration, washing with water, and drying. The degree of oxidation measured in accordance with Measurement Example 6 was 0.11. NMP was added to the obtained graphene, and mixed using a Filmix (PRIMIX Corporation, 30-30 type) to obtain a graphene NMP dispersion having a solid concentration of 0.5%.

### [Example 1]

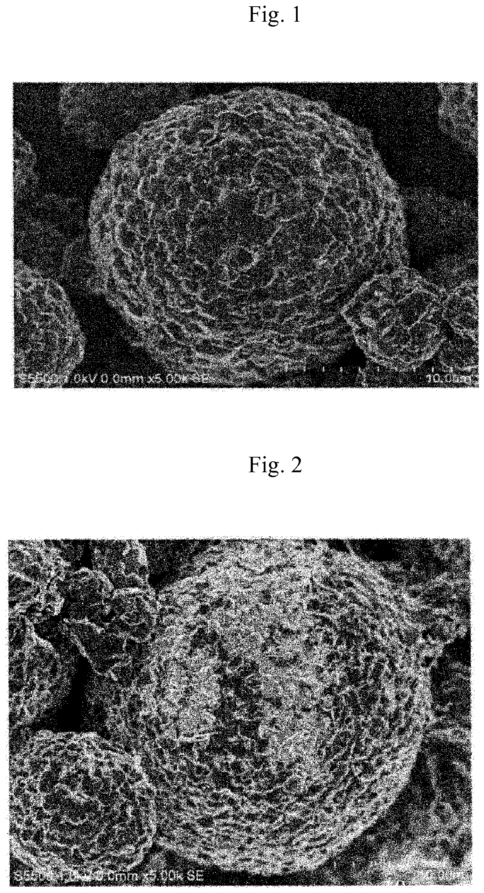

0.03 g of polyethyleneimine (average molecular weight 10,000) and 7 g of NMP were added to 3 g of a positive electrode active substance LiNi_{0.5}Mn_{0.3}Co_{0.2}O₂ (granulated body having a median diameter of 20 µm manufactured by Umicore Corporation), and mixed with a magnetic stirrer at a rotational speed of 700 RPM for 5 minutes. Thereafter, filtration was performed to remove excess polyethyleneimine. A heat treatment was performed to the filtered residue for 40 minutes in an inert oven (DN411I, manufactured by Yamato Chemical Co., Ltd.) heated to 80°C, and then 3.0 g of the graphene oxide NMP dispersion of Preparation Example 1 was added to the dried particles, and mixed with a magnetic stirrer at a rotational speed of 700 RPM for 5 minutes. Thereafter, filtration was performed to remove excess NMP. A heat treatment was performed to the filtered residue for 40 minutes in an inert oven (DN411I, manufactured by Yamato Chemical Co., Ltd.) heated to 80°C to obtain electrode material precursor particles. The obtained precursor particles were heated at a temperature of 200°C for 5 hours in a vacuum atmosphere having a pressure of 0.01 MPa or less to reduce the graphene oxide (heat reduction) and produce an electrode material. An SEM observation image of the obtained electrode material particles is shown in Fig. 1. For the obtained particles, the presence of a peak (amide bond) was confirmed around 1600 cm⁻¹ and around 3,300⁻¹ by infrared analysis.

### [Example 2]

An electrode material was produced in the same manner as in Example 1 except that the graphene NMP dispersion of Preparation Example 2 was used and no heat reduction treatment was performed.

### [Example 3]

0.03 g of polyethyleneimine and 7 g of NMP were added and mixed with a magnetic stirrer at a rotational speed of 700 RPM for 5 minutes. Then 3.0 g of the graphene oxide NMP dispersion of Preparation Example 1 was added and mixed with a magnetic stirrer at a rotational speed of 700 RPM for 5 minutes. 3 g of the positive electrode active substance LiNi_{0.5}Mn_{0.3}Co_{0.2}O₂ (granulated body having a median diameter of 20 µm manufactured by Umicore Corporation) was added to the mixed liquid, and then mixed with a magnetic stirrer at a rotational speed of 700 RPM for 5 minutes. Thereafter, filtration was performed to remove excess NMP and polyethyleneimine. A heat treatment was performed to the filtered residue for 40 minutes an inert oven (DN411I, manufactured by Yamato Chemical Co., Ltd.) heated to 80°C to obtain electrode material precursor particles. The obtained precursor particles were heated at a temperature of 200°C for 5 hours in a vacuum atmosphere having a pressure of 0.01 MPa or less to reduce the graphene oxide (heat reduction) and produce an electrode material.

### [Example 4]

An electrode material was produced in the same manner as in Example 1 except that 5 g of NMP and 45 mg of sodium dithionite were added and mixed with a magnetic stirrer at a rotational speed of 700 RPM for 30 seconds to chemically reduce the graphene oxide, instead of the heat reduction of the electrode material precursor particles in Example 1.

### [Example 5]

An electrode material was produced in the same manner as in Example 1 except that polyethyleneimine was used instead of that having a number average molecular weight of 600.

### [Example 6]

An electrode material was produced in the same manner as in Example 1 except that polydiallyl dimethyl ammonium chloride having a number average molecular weight of 1000 was used instead of polyethyleneimine. For the obtained particles, the presence of a peak (amide bond) was not confirmed around 1600 cm⁻¹ and around 3,300 cm⁻¹ by infrared analysis.

### [Example 7]

An electrode material was produced in the same manner as in Example 1 except that the heat reduction was performed by heating at 400°C for 5 hours.

### [Example 8]

30 mg of a silane coupling agent (referred to as "SC" in Table 1) aminopropyl triethoxysilane (KBE-903 manufactured by Shin-Etsu Chemical Co., Ltd) was added to 3 g of the positive electrode active substance LiNi_{0.5}Mn_{0.3}Co_{0.2}O₂ (granulated body having a median diameter of 20 µm manufactured by Umicore Corporation) to be mixed with a rotation and revolution mixer (ARE-310, manufactured by Thinky Corporation) at a rotational speed of 2000 RPM for 5 minutes. Thereafter, a heat treatment was performed for 40 minutes with an inert oven (DN411I, manufactured by Yamato Chemical Co., Ltd.) heated to 80°C, and then 0.03 g of polyethyleneimine (average molecular weight: 10,000) and 7 g of NMP were added, and mixed with a magnetic stirrer at a rotational speed of 700 RPM for 5 minutes. Thereafter, filtration was performed to remove excess polyethyleneimine. A heat treatment was performed to the filtered residue for 40 minutes in an inert oven (DN411I, manufactured by Yamato Chemical Co., Ltd.) heated to 80°C, and then 3.0 g of the graphene oxide NMP dispersion of Preparation Example 1 was added to the dried particles, and mixed with a magnetic stirrer at a rotational speed of 700 RPM for 5 minutes. Thereafter, filtration was performed to remove excess NMP. A heat treatment was performed to the filtered residue for 40 minutes in an inert oven (DN411I, manufactured by Yamato Chemical Co., Ltd.) heated to 80°C to obtain electrode material precursor particles. The obtained precursor particles were heated at a temperature of 200°C for 5 hours in a vacuum atmosphere having a pressure of 0.01 MPa or less to reduce the graphene oxide (heat reduction) and produce an electrode material. For the obtained particles, the presence of a peak (siloxane bond) was confirmed at 1,000 cm⁻¹ to 1,200⁻¹ by infrared analysis.

### [Example 9]

An electrode material was produced in the same manner as in Example 1, except that the active substance particles were replaced with a LCO active substance (LiCoO₂, manufactured by Hohsen Corp.).

### [Example 10]

An electrode material was produced in the same manner as in Example 1 except that the electrode material precursor particles were irradiated with 950 mJ/cm² of white pulsed light for 3000 microseconds to reduce the graphene oxide (light reduction), instead of a heat reduction.

### [Example 11]

An electrode material was produced in the same manner as in Example 1 except that an addition amount of NMP to the positive electrode active substance was 15 g and an addition amount of the graphene oxide NMP dispersion of Preparation Example 1 was 2.0 g.

### [Comparative Example 1]

3.0 g of the graphene oxide NMP dispersion of Preparation Example 1 was added to 3 g of the positive electrode active substance LiNi_{0.5}Mn_{0.3}Co_{0.2}O₂ (granulated body having a median diameter of 20 µm manufactured by Umicore Corporation) and mixed with a magnetic stirrer at a rotational speed of 700 RPM for 5 minutes. Thereafter, filtration was performed, and a heat treatment was performed to the filtered residue for 40 minutes in an inert oven (DN411I, manufactured by Yamato Chemical Co., Ltd.) heated to 80°C to obtain electrode material precursor particles. The obtained precursor particles were heated at a temperature of 200°C for 5 hours in a vacuum atmosphere having a pressure of 0.01 MPa or less to reduce the graphene oxide (heat reduction) and produce an electrode material. An SEM observation image of the obtained electrode material particles is shown in Fig. 2. For the obtained particles, the presence of a peak (amide bond) was not confirmed around 1600 cm⁻¹ and around 3,300 cm⁻¹ by infrared analysis.

### [Comparative Example 2]

An electrode material was produced in the same manner as in Comparative Example 1 except that the graphene oxide NMP dispersion of Preparation Example 1 was changed to the graphene NMP dispersion of Preparation Example 2 and no heat reduction treatment was performed.

### [Comparative Example 3]

An electrode material was produced in the same manner as in Comparative Example 1, except that the active substance particles were replaced with a LCO active substance (LiCoO₂, manufactured by Hohsen Corp.).

Table 1 shows a method for manufacturing an electrode material produced in each of Examples and Comparative Examples, and Table 2 shows measurement results of various physical properties and battery performance evaluation in accordance with each of Measurement Examples.

**[Table 1]**

| | | Method for manufacturing electrode material | | | | | | | |
|---|---|---|---|---|---|---|---|---|---|
| | Graphene material | Electrode active material | Zeta potential of active substance (mV) | Zeta potential of graphene material (mV) | Cationization agent used | Number average molecular weight of cationization agent | Cationization treatment target | Reduction step | Reduction conditions in reduction step (temperature/reduction atmosphere/treatment time) |
| Example 1 | Preparation Example 1 (graphene oxide) | NCM523 | -59 | -49 | Polyethyleneimine | 10,000 | Active substance | Heat reduction | 200°C/Vacuum/5 hours |
| Example 2 | Preparation Example 2 (graphene) | NCM523 | -61 | -30 | Polyethyleneimine | 10,000 | Active substance | - | - |
| Example 3 | Preparation Example 1 (graphene oxide) | NCM523 | -60 | -48 | Polyethyleneimine | 10,000 | Graphene oxide | Heat reduction | 200°C/Vacuum/5 hours |
| Example 4 | Preparation Example 1 (graphene oxide) | NCM523 | -61 | -49 | Polyethyleneimine | 10,000 | Active substance | Chemical reduction | Room temperature/Na dithionite/30 sec |
| Example 5 | Preparation Example 1 (graphene oxide) | NCM523 | -59 | -47 | Polyethyleneimine | 600 | Active substance | Heat reduction | 200°C/Vacuum/5 hours |
| Example 6 | Preparation Example 1 (graphene oxide) | NCM523 | -60 | -48 | Polydiallyl dimethyl ammonium chloride | 1,000 | Active substance | Heat reduction | 200°C/Vacuum/5 hours |
| Example 7 | Preparation Example 1 (graphene oxide) | NCM523 | -60 | -47 | Polyethyleneimine | 10,000 | Active substance | Heat reduction | 400°C/Vacuum/5 hours |
| Example 8 | Preparation Example 1 (graphene oxide) | NCM523 (SC) | -51 | -50 | Polyethyleneimine | 10,000 | Active substance | Heat reduction | 200°C/Vacuum/5 hours |
| Example 9 | Preparation Example 1 (graphene oxide) | LCO | -20 | -50 | Polyethyleneimine | 10,000 | Active substance | Heat reduction | 200°C/Vacuum/5 hours |
| Example 10 | Preparation Example 1 (graphene oxide) | NCM523 | -20 | -47 | Polyethyleneimine | 10,000 | Active substance | Light reduction | Room temperature/950 mJ/cm²/3,000 usec |
| Example 11 | Preparation Example 1 (graphene oxide) | NCM523 | -61 | -49 | Polyethyleneimine | 10,000 | Active substance | Heat reduction | 200°C/Vacuum/5 hours |
| Comparative Example 1 | Preparation Example 1 (graphene oxide) | NCM523 | -61 | -49 | - | - | - | Heat reduction | 200°C/Vacuum/5 hours |
| Comparative Example 2 | Preparation Example 2 (graphene) | NCM523 | -61 | -30 | - | - | - | - | - |
| Comparative Example 3 | Preparation Example 1 (graphene oxide) | LCO | -20 | -48 | - | - | - | Heat reduction | 200°C/Vacuum/5 hours |

**[Table 2]**

| | Analysis result of electrode material | | | | | | Discharge capacity (mAh/g) | | Load characteristics [3 C/1 C] (%) | Discharge capacity after high temperature storage (mAh/g) | High temperature storage characteristics [after storage/before storage] (%) | Discharge capacity after 500 cycles (mAh/g ) | Cycle characteristics [after cycle/before cycle] (%) |
|---|---|---|---|---|---|---|---|---|---|---|---|---|---|
| | Size of graphene (µm) | Average covering thickness of graphene (nm) | Degree of oxidation | Functionalization rate | I (D)/I (G) | N/C ratio | 1 C | 3 C | | | | | |
| Example 1 | 20.0 | 60.0 | 0.15 | 0.40 | 0.80 | 0.02 | 151 | 123 | 81.46 | 125 | 82.78 | 111 | 73.51 |
| Example 2 | 15.0 | 60.0 | 0.10 | 0.15 | 1.60 | 0.03 | 152 | 118 | 77.63 | 121 | 79.61 | 107 | 70.39 |
| Example 3 | 20.0 | 60.0 | 0.15 | 0.40 | 0.80 | 0.03 | 153 | 122 | 79.74 | 125 | 81.70 | 111 | 72.55 |
| Example 4 | 20.0 | 60.0 | 0.13 | 0.18 | 0.70 | 0.03 | 153 | 120 | 78.43 | 123 | 80.39 | 109 | 71.24 |
| Example 5 | 20.0 | 30.0 | 0.15 | 0.40 | 0.80 | 0.04 | 153 | 137 | 89.54 | 137 | 89.54 | 123 | 80.39 |
| Example 6 | 20.0 | 35.0 | 0.20 | 0.40 | 0.76 | 0.03 | 147 | 123 | 83.67 | 117 | 79.59 | 103 | 70.07 |
| Example 7 | 20.0 | 50.0 | 0.10 | 0.20 | 1.10 | 0.03 | 148 | 128 | 86.49 | 130 | 87.84 | 116 | 78.38 |
| Example 8 | 20.0 | 20.0 | 0.15 | 0.40 | 0.83 | 0.04 | 154 | 142 | 92.21 | 143 | 92.86 | 135 | 87.66 |
| Example 9 | 20.0 | 60.0 | 0.15 | 0.40 | 0.80 | 0.03 | 133 | 114 | 85.71 | 114 | 85.71 | 103 | 77.44 |
| Example 10 | 20.0 | 40.0 | 0.30 | 0.50 | 1.10 | 0.03 | 146 | 125 | 85.62 | 123 | 84.25 | 112 | 76.71 |
| Example 11 | 20.0 | 10.0 | 0.17 | 0.40 | 0.80 | 0.03 | 153 | 143 | 93.46 | 143 | 93.46 | 135 | 88.24 |
| Comparative Example 1 | 20.0 | 80.0 | 0.15 | 0.40 | 0.90 | 0.01 | 150 | 114 | 76.00 | 108 | 72.00 | 101 | 67.33 |
| Comparative Example 2 | 15.0 | 100.0 | 0.10 | 0.15 | 1.60 | 0.01 | 125 | 95 | 76.00 | 90 | 72.00 | 70 | 56.00 |
| Comparative Example 3 | 20.0 | 90.0 | 0.15 | 0.40 | 0.90 | 0.01 | 131 | 90 | 68.70 | 96 | 73.28 | 89 | 67.94 |

Although the present invention has been described in detail with reference to particular embodiments, it will be apparent to those skilled in the art that various changes and modifications can be made without departing from the spirit and scope of the present invention. This application is based on Japanese Patent Application No. 2016-252447 filed on December 27, 2016, the contents of which are incorporated herein by reference.

## Claims

1. A method for manufacturing an electrode material, wherein the electrode material comprises an electrode active substance covered with a graphene material, the method comprising either of the following electrostatic adsorption steps:
(1) a step of electrostatically adsorbing a cationization agent on the electrode active substance, and then electrostatically adsorbing the graphene material on the electrode active substance on which the cationization agent has been electrostatically adsorbed; and
(2) a step of electrostatically adsorbing the cationization agent on the graphene material, and then electrostatically adsorbing the graphene material on which the cationization agent has been electrostatically adsorbed on the electrode active substance.

2. The method for manufacturing an electrode material according to claim 1, wherein the cationization agent comprises at least one kind selected from the group consisting of a cationic low molecular compound containing at least one of a quaternary ammonium cation and a pyridinium salt, and a cationic high molecular compound.

3. The method for manufacturing an electrode material according to claim 2, wherein the cationic high molecular compound comprises at least one kind selected from the group consisting of a primary amino group, a secondary amino group, a tertiary amino group, an imino group, an imide group, an amide group, and a quaternary ammonium cation.

4. The method for manufacturing an electrode material according to claim 2 or 3, wherein a number average molecular weight of the cationic high molecular compound is 600 or more.

5. The method for manufacturing an electrode material according to any one of claims 1 to 4, wherein the graphene material having an absolute value of zeta potential in N-methylpyrrolidone of 30 mV or more is used.

6. The method for manufacturing an electrode material according to any one of claims 1 to 5, wherein the electrode active substance having an absolute value of zeta potential in N-methylpyrrolidone of 30 mV or more is used.

7. The method for manufacturing an electrode material according to any one of claims 1 to 6, further comprising:
a heat treatment step of heat treating the graphene material adsorbed in the electrostatic adsorption step.

8. The method for manufacturing an electrode material according to any one of claims 1 to 7, further comprising:
a reduction step of reducing the graphene material adsorbed in the electrostatic adsorption step.

9. The method for manufacturing an electrode material according to any one of claims 1 to 6, further comprising:
a reduction step of reducing the graphene material adsorbed in the electrostatic adsorption step, wherein
a heat treatment step of heat treating the graphene material adsorbed in the electrostatic adsorption step is carried out simultaneously by performing a heat reduction in the reduction step.

10. The method for manufacturing an electrode material according to any one of claims 1 to 9, further comprising: a silane coupling agent treatment step of performing a silane coupling treatment of a surface of the electrode active substance before the electrostatic adsorption step.

11. An electrode material comprising an electrode active substance and a graphene material, wherein the electrode active substance and the graphene material adhere to each other via a cationization agent comprising at least one kind selected from the group consisting of a cationic low molecular compound containing at least one of a quaternary ammonium cation and a pyridinium salt, and a cationic high molecular compound.

12. The electrode material according to claim 11, wherein the cationic high molecular compound comprises at least one kind selected from the group consisting of a primary amino group, a secondary amino group, a tertiary amino group, an imino group, an imide group, an amide group, and a quaternary ammonium cation.

13. The electrode material according to claim 11 or 12, wherein an average distance between the electrode active substance and the graphene material is less than 20 nm.

14. The electrode material according to any one of claims 11 to 13, wherein a number average molecular weight of the cationic high molecular compound is 600 or more.

15. The electrode material according to any one of claims 11 to 14, wherein an elemental ratio of nitrogen to carbon (N/C ratio) measured by X-ray photoelectron spectroscopy is 0.02 or more and 0.04 or less.

16. The electrode material according to any one of claims 11 to 15, wherein at least one of an amide bond and a siloxane bond is detected.

17. An electrode for a secondary battery, comprising the electrode material according to any one of claims 11 to 16.
